# EUROPEAN PATENT APPLICATION

(11) **EP 0 960 562 A2**
(43) Date of publication of application: **01.12.1999**
(21) Application number: 99850092.0
(22) Date of filing: 26.05.1999
(51) Int. Cl.: A01G 25/09

(54) **Irrigation device with raisable boom**

(30) Priority: 29.05.1998 SE 9801910
(71) Applicant: Olsson, Anders, 297 31 Degeberga (SE)
(72) Inventor: Olsson, Anders, 297 31 Degeberga (SE)
(74) Representative: Akerman, Marten Lennart

(57) **Abstract**

The invention relates to an irrigation device having a boom for sprinkling of water over a field, The boom has a large width but is easy to move at the same time. The irrigation device is of the type having a hose drum with a hose which is connected to the boom for pulling the boom across the field. The irrigation device has thus a boom (2) with nozzles along the length of the boom, a hose to supply the boom with water and pull the boom across the filed, a drum (15) for unwinding and winding of the hose and a carriage supporting the drum and moveable by a tractor. According to the invention the boom is arranged to be raised such that the tractor may pass under the boom when the device is to be moved.

## Description

### Field of invention

The present invention relates to an irrigation device and, more particularly, an irrigation device having a boom for distributing water over the field. The boom has a large width but is easy to move at the same time. The irrigation device is of the type having a hose drum with a hose connected to the boom for pulling the ramp over the field.

### State of the art

A known type of irrigation device is the so called "large sprinkler" consisting of a canon with single nozzle which is turned an angle during the irrigation. The canon is pulled over a field while the canon is made to sweep over the angle. The canon has a range or radius which is relatively large, e.g. 70 - 110 metres. The problem with this previous type of irrigation device is that the wind easily affects the water jet so that the water does not fall in the right place. In a hard or gusty wind there is risk to irrigate outside the field, e.g. on neighbouring buildings, roads and cars, etc. This is of course also a waste of water. Statistics show that too hard wind (> 2m/s) prevails for approximately 70 % of the daytime.

It is also known to use booms with nozzles or sprinklers for irrigation. Since the nozzles are located relatively near the ground, this type of irrigation device is less sensitive to the wind, In order to make the previously known booms easy to handle and move, they have been designed as foldable booms, i.e. provided with joints and hinges of various types. A problem with these previously known booms is that it is time consuming and laborious to fold the boom each time the boom is to be moved. Also, because of the joints and hinges, the boom construction is heavy and it is difficult to manufacture stable booms with a length in excess of e.g. 48 metres which is a common length today. Another problem is, if one chooses not to fold the boom when it is to be moved, that the tractor instead has to drive around the boom and, owing to that, into the valuable crops. If the boom is 48 metres, the tractor has to drive approximately 24 metres into the crops in order to get around the boom at one side.

Thus, there is a need of irrigation devices which are easy to move, are not so sensitive to the wind and may be moved without driving into the crops. The present invention solves these problems by providing an irrigation device having a very wide boom. The boom may be raised so that the tractor may drive under and therefore does not have to drive round the boom. The boom is not foldable but a rigid structure, which means that it may be made lighter but yet stable in great lengths. The boom is also adapted to be moved in its longitudinal direction, which facilitates transportation.

### Summary of the invention

Thus, the present invention provides an irrigation device having a boom with nozzles along the length of the boom in order to perform irrigation of a field during motion. The device also has a hose to supply water to the boom and pull the boom over the field, a drum for unwinding and winding of the hose and a carriage carrying the drum and moveable by a tractor.

According to the invention the boom is adapted to be able to be raised so that the tractor may pass under the boom when the device is to be moved.

The invention is defined in the accompanying claim 1 while preferred embodiments are set forth in the dependent claims.

### Brief description of the drawings

The invention will be described in detail below with reference to the accompanying drawings, in which
figure 1 is a side view, partly in cross section, of the device according to the invention,
figure 2 is a front view of the device or a side view of the boom showing only the boom, and
figure 3 is a top view of the boom only.

### Detailed description of preferred embodiments

The irrigation device according to the invention comprises generally a carriage having a hose drain and a boom of a novel type. The carriage with the hose drum may be of a previously known design and an existing carriage, e.g. for large sprinklers, may be complemented with a boom according to the invention, In a known way a hose is unwound from the drum when the water sprinkler is pulled out and the drum pulls the sprinkler by means of the hose across the field at the same time as the hose supplies water to the water sprinkler.

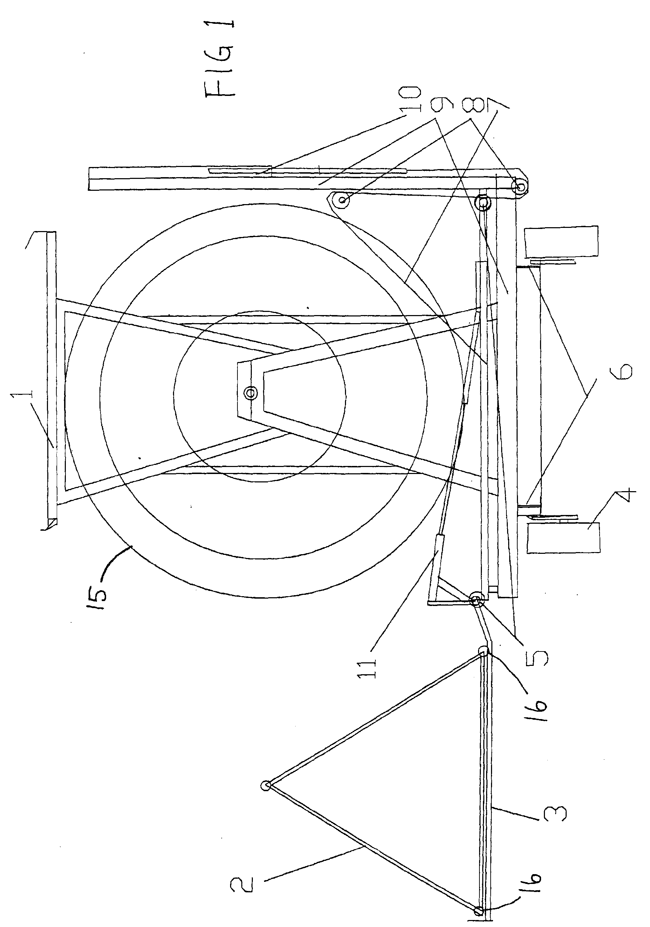

Figure 1 is an explanatory sketch of an irrigation device according to the invention. On the right hand the carriage may be seen with its various parts and on the left hand the boom 2 is shown. When the boom is not used for irrigation and the whole carriage is to be moved the boom 2 is placed on a storage position 1. To this end, the carriage is provided with a lifting device having a fork 3 catching the boom at the wheel base of the boom. The lifting device has a double-acting cylinder 11 and a wire 7 and wire pulleys 8 to achieve a lifting movement. The lifting device is moveable at the joints 5. The carriage is also provided with a vertical pulling cylinder 10 to lift up the boom.

As may be seen, the carriage is reinforced by the vertical and horizontal support arms 9 of the lifting device, and possibly also reinforced in the frame of the carriage by means of beams at 6. In order to be able to support the weight of the novel boom, it may also be necessary to fit stronger wheels 4.

The wheel axes of the carriage is suitably arranged at a right angle to the longitudinal direction of the boom, such that the carriage is driven transversely to the irrigation direction of the boom.

The drum 15 may be in accordance with the prior art.

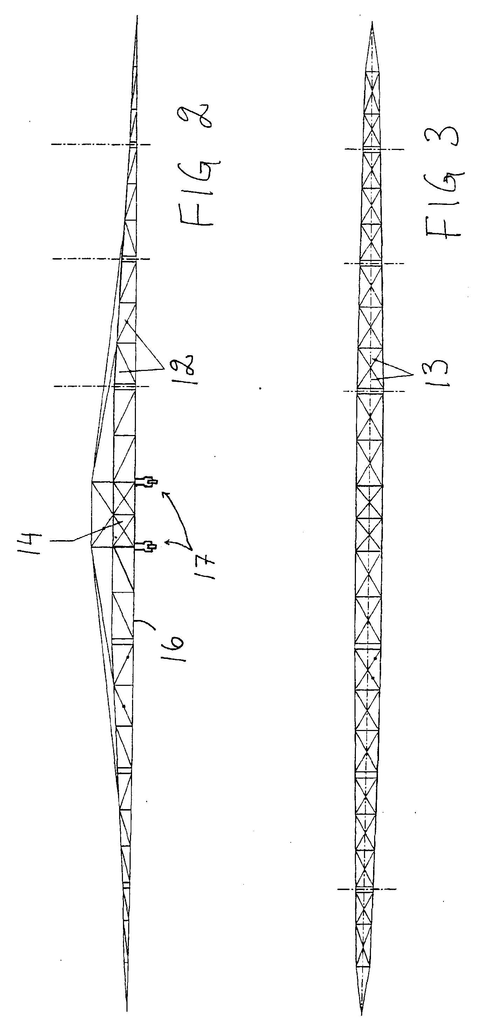

In the figures 2 and 3, only the boom according to the invention is shown. As mentioned previously, the boom is a rigid structure in order to avoid heavy joints and hinges and keep down the weight. Because of this the boom may be made relatively long, e.g. 96 metres, without becoming too heavy or unstable. The boom is connected to the water hose and water is transported in the boom along some or both of the lower tubes 16 of the boom. Nozzles or sprinklers are connected to the lower tubes via valves, e.g. controllable solenoid valves. The framework comprises drawn diagonal members 12 of tubes, diagonal braces 13 between lower edge tubes of thin round irons and wire crosses 14 for staying of wire trestles.

The boom is provided with a wheel set 17 supporting the boom when it is pulled across the field during irrigation, The wheel set has suitably bogie wheels with two wheels at each side for a smooth ride, The wheel set has also suitable an adjustable track width to register with tracks arranged in the crops in a known way. When the boom is raised the wheels are located on each side of the drum.

In order to prevent that the extreme ends of the boom hit the ground if the field is sloping or is not even, the boom may be mounted on the wheel set by means of a pivot suspension. Pivot suspensions are known as such in the prior art. Alternatively, the wheel set may be provided with a jack system with electric jacks or the like to set the inclination of the boom in relation to the horizontal plane.

The invention is suitably used as follows. We enter the process when an area of a filed has been completely irrigated. Then the boom 2 has reached the carriage as is shown in figure 1. The operator drives the tractor up to the carriage and connects it. The irrigation device suitably utilises the hydraulic system and the power take-off of the tractor. The boom 2 is engaged by the fork 3 and may be lifted up to the storage position 1. This may be performed on command from an operator or automatically. The connection to the water supply is disconnected. Thereafter the carriage is moved with the boom along a distance equal to the length of the boom, in order to be able to irrigate a new area of the field. The boom is e.g. 96 metres long to be adapted to the usual modules normally used.

After this transverse movement the tractor is disconnected from the carriage and driven to a suitable position in front of the device, The boom 2 is lowered from the storage position above the drum and down to the ground. The connection to the water supply may now be connected. The tractor may now be connected to the boom and pull the boom across the field to the start position of the boom. The irrigation is started and this may be performed automatically.

Thus, the present invention provides an irrigation device having several advantages over the prior art. The irrigation device is moved quickly and easily in that the tractor can drive under the boom and move the device sideways. The boom is a rigid structure without any folding feature, which means that the width may be made twice as big as compared with the prior devices without becoming unstable. This will of course halve the number of moves. The water is used in an efficient way since it is not blown away. Because of this it will be economically justified to mix e.g. fertilizer into the water. The irrigation device may be powered at lower water pressure than large sprinklers which also decreases the power consumption.

A further feature of the invention is that it is possible to achieve differentiated irrigation on fields having different needs of water at different parts of the field. This is achieved by controlling the valves along the boom in various ways so that they pass different amounts of water. In this connection it is suitable to use electrically controlled solenoid valves which may be set by means of a control panel arranged at the carriage.

It will be appreciated that the mechanical structure of the boom, carriage, hose drum, lifting means, etc may be varied in many ways by persons skilled in the art and has only been described in illustrated purposes. The invention is only limited by the claims below.

## Claims

1. An irrigation device (2) comprising a boom (2) having nozzles along the length of the boom to achieve irrigation of a field during movement, a hose to supply water to the boom and pull the boom across the field, a drum (15) for unwinding and winding the hose, a carriage supporting the drum (15) and moveable by a tractor, **characterised** in that the boom (2) is arranged to be raised, such that the tractor may pass under the boom (2) when the device is to be moved.

2. An irrigation device according to claim 1, **characterised** in that the boom (2) is adapted to be placed on top of the drum (15).

3. An irrigation device according to claim 1, **characterised** in that the boom (2) is a rigid framework structure having a great length, e.g. 96 metres.

4. An irrigation device according to anyone of the previous claims, **characterised** in that the carriage is arranged to be moved in the longitudinal direction of the boom (2).

5. An irrigation device according to anyone of the previous claims, **characterised** in that the boom has a wheel set (17) to support the boom (2) during the movement across the field.

6. An irrigation device according to claim 5, **characterised** in that the wheels of the wheel set (17) are adapted to be placed at each side of the drum (15) when the boom (2) is raised.

7. An irrigation device according to claim 5 or 6, **characterised** in that the wheel set has an adjustable track width.

8. An irrigation device according to claims 5, 6 or 7, **characterised** in that the boom is connected by pivot suspension to the wheel set.

9. An irrigation device according to claims 5, 6 or 7, **characterised** in that the wheel set has jacks to set the inclination of the boom in relation to a horizontal plane.

10. An irrigation device according to claim anyone of the previous claims, **characterised** in that the boom has solenoid valves which may be controlled to achieve a differentiated sprinkling of water along the boom.
